Europäisches Patentamt

European Patent Office

Office européen des brevets

(19)

(11) Veröffentlichungsnummer: **0 008 001**
**A1**

(12) # EUROPÄISCHE PATENTANMELDUNG

(21) Anmeldenummer: 79102286.6

(22) Anmeldetag: 05.07.79

(51) Int. Cl.³: **G 11 B 23/04, C 22 C 19/00**

(30) Priorität: 12.08.78 DE 2835459

(43) Veröffentlichungstag der Anmeldung: 20.02.80
Patentblatt 80/4

(84) Benannte Vertragsstaaten: **BE DE FR GB IT NL**

(71) Anmelder: VACUUMSCHMELZE GMBH, Bereich
Verträge und Patente Grüner Weg 37 Postfach 109,
D-6450 Hanau 1 (DE)

(72) Erfinder: Greiner, Joachim, Dr., Ulrich-von-Hassell-
Strasse 15, D-8026 Ebenhausen (DE)
Erfinder: Mager, Albrecht, Dr., Forststrasse 3, D-6458
Rodenbach (DE)

(54) **Federndes Abschirmelement, insbesondere für Magnetbandkassetten.**

(57) Ein federndes Abschirmelement (1) besteht erfindungsgemäß aus einer federnden weichmagnetischen Legierung.
Besonders günstig sind Legierungen, die eine statische
Koerzitivfeldstärke von weniger als 200 mA/cm, eine relative statische Permeabilität (gemessen als Gleichfeldpermeabilität bei 4 mA/cm) von mindestens 2000 und eine
Vickershärte von mindestens 180 aufweisen und deren
Streckgrenze mindestens 500 N/mm² beträgt. Geeignet
sind sowohl kristalline als auch amorphe weichmagnetische
Legierungen.

Die federnden Abschirmelemente eignen sich für Magnetbandkassetten, insbesondere Kompaktkassetten, sowie
für andere Zwecke, bei denen gleichzeitig mit der Abschirmwirkung eine Federwirkung erforderlich ist.

EP 0 008 001 A1

VACUUMSCHMELZE GMBH        Unser Zeichen
Hanau        VP 78 P 9559 BRD

## Federndes Abschirmelement, insbesondere für Magnetbandkassetten

Die Erfindung betrifft ein federndes Abschirmelement, insbesondere für Magnetbandkassetten.

Allgemein werden Magnetköpfe gegen magnetische Störfelder durch Abschirmungen geschützt. Üblicherweise sind dabei die Magnetköpfe mit Ausnahme des Kopfspiegels, an dem das Magnetband anliegt, von einer Abschirmung umschlossen. Derart abgeschirmte Magnetköpfe, nämlich ein kombinierter Aufnahme- und Wiedergabekopf oder getrennte Magnetköpfe, treten beispielsweise bei den handelsüblichen Kompakt-Kassetten für Tonbänder, bei denen das Band zwischen zwei Wickelkernen umgespult wird, in Betriebsstellung durch Öffnungen in der Stirnseite der Kassette hindurch. An den Durchtrittstellen der Magnetköpfe befinden sich innerhalb der Kassette Abschirmelemente, die den Kopfspiegel decken sollen, üblicherweise

Kb/Bz     11.8.1978

in Form eines flachen oder U-förmigen Bleches aus einer hochpermeablen Eisen-Nickel-Legierung. Um das Magnetband an den Magnetkopf anzudrücken, sind zusätzliche Federelemente vorgesehen.

So wird bei der Kassette gemäß dem deutschen Gebrauchsmuster 72 08 034 ein starrer Abschirmkörper, der dem Magnetkopf gegenüber auf der anderen Seite des Magnetbandes angeordnet ist und eine Gleitauflage für das Magnetband trägt, an seiner vom Magnetband abgewandten Seite durch ein Federelement an den Magnetkopf angedrückt. Bei anderen handelsüblichen Kassetten befindet sich die Andruckfeder, die eine Gleitauflage aus Filz oder Schaumstoff trägt, zwischen Tonband und Abschirmelement. Ferner ist aus der deutschen Auslegeschrift 20 36 754 ein Abschirmelement bekannt, das als einseitig offener Hohlquader ausgebildet ist, dessen vier Seitenflächen im Betriebszustand den Kopfspiegel einschließlich der geräteseitigen Tonkopfabschirmung überlappen. Durch diese Form der Abschirmung wird der Einfluß des Abschirmmaterials verringert, so daß anstelle der hochpermeablen Legierungen, insbesondere anstelle der teuren Eisen-Nickel-Legierungen, billigere Materialien relativ geringer Permeabilität, wie weichmagnetische Eisensorten, verwendet werden können. Auch bei dieser Abschirmung ist eine eigene Andruckfeder für das Tonband erforderlich.

Die Vereinigung von Abschirm- und Andruckfederfunktion in einem einzigen Bauteil ist aus der deutschen Offenlegungsschrift 26 33 672 bekannt. Das Bauteil besteht dabei aus einem streifenförmigen, zweischichtigen Laminat, wobei die eine Schicht aus einem federnden Material, beispielsweise Berylliumbronze, und die andere Schicht aus einem spannungsfreien Material hoher Permeabilität, beispielsweise aus Eisen, Nickel oder
einer Eisen-Nickel-Legierung, besteht. Am Laminat befindet sich ferner ein elastisches Andruckstück, welches
das federnde Abschirmelement in einem Abstand von etwa
0,8 bis 1 mm vom Tonkopf hält. Durch die Vereinigung von
Abschirm- und Andruckfederfunktion in einem Bauelement
wird bei gleicher oder sogar verbesserter Abschirmwirkung die Montage erheblich vereinfacht und der Platzbedarf für Feder und Abschirmung in der Kassette verringert.
Allerdings ist die Herstellung des zweischichtigen
Laminats verhältnismäßig aufwendig.

Aufgabe der Erfindung ist es, federnde Abschirmelemente,
insbesondere für Magnetbandkassetten, unter Beibehaltung
der Vereinigung von Abschirm- und Andruckfederfunktion
in einem Bauelement weiter zu vereinfachen.

Diese Aufgabe wird erfindungsgemäß dadurch gelöst, daß
das Abschirmelement aus einer federnden weichmagnetischen Legierung besteht.

Überraschenderweise hat sich nämlich herausgestellt, daß
bei geeigneter Legierungswahl die weichmagnetische Legierung selbst die Federfunktion übernehmen kann, ohne
daß dadurch die Abschirmfunktion leidet.

Das erfindungsgemäße federnde Abschirmelement kann vorteilhaft streifenförmig ausgebildet sein.

Besonders günstig sind Legierungen, die eine statische
Koerzitivfeldstärke von weniger als 200 mA/cm, eine
relative statische Permeabilität $\mu_4$ (gemessen als Gleichfeldpermeabilität bei 4 mA/cm) von mindestens 2000 und eine Vickershärte von mindestens 180 aufweisen. Vorzugsweise sollte die Streckgrenze der Legierung mindestens
500 N/mm$^2$ betragen.

Diese Anforderungen lassen sich sowohl mit kristallinen
weichmagnetischen Legierungen erfüllen als auch mit
amorphen weichmagnetischen Legierungen. Die letzteren
lassen sich bekanntlich dadurch herstellen, daß man eine
entsprechende Schmelze so rasch abkühlt, daß ein Erstarren ohne Kristallisation eintritt. Die Legierungen können
dabei gleich bei ihrer Entstehung in Form dünner Bänder
gewonnen werden, deren Dicke beispielsweise einige hundertstel mm und deren Breite einige mm bis mehrere cm
betragen kann.

Von den kristallinen weichmagnetischen Legierungen sind
für das federnde Abschirmelement insbesondere solche geeignet, die aus 35 bis 87 Gew.-% Nickel, 0 bis 10 Gew.-%
Niob, 0 bis 5 Gew.-% Titan, 0 bis 12 Gew.-% Kupfer, 0
bis 6 Gew.-% Molybdän, 0 bis 4 Gew.-% Chrom und, abgesehen von desoxidierenden Zusätzen und den üblichen
herstellungsbedingten Verunreinigungen,
zum restlichen Teil aus Eisen bestehen, mit der Maßgabe,
daß der Gesamtgehalt an Niob und Titan zwischen 1,5 und
10 Gew.-% und der Gesamtgehalt an Kupfer, Molybdän und
Chrom zwischen 0 und 13 Gew.-% liegt und daß bei einem
Titangehalt von 0 Gew.-% der Niobgehalt wenigstens 5
Gew.-% beträgt. Legierungen dieser Art sind zur Verwendung für Magnetköpfe bereits aus der deutschen Auslegeschrift 22 12 062 und der deutschen Offenlegungsschrift 22 25 020 bekannt, jedoch läßt sich diesen Literaturstellen nichts hinsichtlich der Eignung der vorgenannten Legierungen als federnde Abschirmungen entnehmen.

0008001

Die Elemente Kupfer, Molybdän und Chrom dienen, wie dies bereits von den sogenannten Permalloy-Legierungen bekannt ist, zur Verbesserung der magnetischen Eigenschaften, während Niob und Titan mechanisch härtende Zusätze darstellen. Bei einem Gesamtgehalt von weniger als 1,5 Gew.-% Niob und Titan wären die Legierungen nicht ausreichend hart, während sich zu hohe Gehalte an diesen Komponenten nachteilig auf die magnetischen Eigenschaften der Legierungen auswirken und sich insbesondere in einer Absenkung der Sättigungsinduktion bemerkbar machen würden.

Besonders günstig hinsichtlich der magnetischen Eigenschaften sind Legierungen, deren Nickelgehalt zwischen 68 und 81 Gew.-% und deren Gesamtgehalt an Kupfer, Molybdän und Chrom zwischen 1,5 und 13 Gew.-% liegt. Zur Erzielung guter Federeigenschaften ist es ferner günstig, wenn der Gesamtgehalt der Legierung an Niob und Titan zwischen 2 und 9 Gew.-% liegt und bei fehlendem Niob der Titangehalt zwischen 2 und 3 Gew.-% sowie bei fehlendem Titan der Niobgehalt zwischen 7 und 9 Gew.-% liegt.

Als besonders vorteilhaft hinsichtlich ihrer gesamten Eigenschaften haben sich Legierungen erwiesen, die aus 72 bis 77 Gew.-% Nickel, 4 bis 11 Gew.-% Kupfer, 0 bis 4 Gew.-% Molybdän, 1 bis 3,5 Gew.-% Niob, 1,5 bis 2,5 Gew.-% Titan und, abgesehen von desoxidierenden Zusätzen und herstellungsbedingten Verunreinigungen von insgesamt höchstens 1 Gew.-%, zum restlichen Teil aus Eisen bestehen.

Besonders niedrige Werte für die Koerzitivfeldstärke und hohe Werte für die Permeabilität $\mu_4$ verbunden mit einer hohen Vickershärte und Federkraft lassen sich bei den vorgenannten Legierungen erreichen, wenn man diese zunächst im fertiggewalzten Zustand zur Rekristallisation einige Sekunden bis einige Tage, vorzugsweise 2 bis 4 Stunden lang, bei einer Temperatur zwischen etwa 700 und 1000°C unter Inertgas, beispielsweise Wasserstoff, glüht und sie dann zum Aushärten einer etwa 1- bis 4-stündigen Anlaßbehandlung im Temperaturbereich zwischen 500 und 700°C unterzieht.

Bei den genannten Legierungen beträgt die Dicke des streifenförmigen Abschirmelementes vorzugsweise 0,07 bis 0,25 mm.

Wie bereits erwähnt, eignen sich für das erfindungsgemäße federnde Abschirmelement ferner amorphe weichmagnetische Legierungen.

Je nach den Herstellungsbedingungen können die amorphen Legierungen vollständig amorph sein oder ein zweiphasiges Gemisch des amorphen und des kristallinen Zustandes umfassen. Im allgemeinen versteht man unter einer amorphen Metallegierung eine Legierung, die zu wenigstens 50 %, vorzugsweise zu wenigstens 80 %, amorph ist. Für jede amorphe Metallegierung gibt es eine charakteristische Temperatur, die sogenannte Kristallisationstemperatur. Erhitzt man die amorphe Legierung auf oder über diese Temperatur, so geht sie in den kristallinen Zustand über, in dem sie auch nach Abkühlung verbleibt. Bei Wärmebehandlungen unterhalb der Kristallisationstemperatur bleibt dagegen der amorphe Zustand erhalten.

Die bislang bekannten weichmagnetischen amorphen Metalllegierungen haben die Zusammensetzung $M_yX_{100-y}$, wobei M
wenigstens eines der Metalle Eisen, Kobalt und Nickel,
und X wenigstens eines der sogenannten glasbildenden
Elemente Bor, Kohlenstoff, Silizium und Phosphor bedeutet und y zwischen etwa 70 und 90 liegt. Die Indizes
geben somit den Gehalt der jeweiligen Legierung an den
entsprechenden Elementen in Atom.-% an. Zusätzlich zu
den Metallen M können die amorphen Legierungen auch noch
weitere Metalle, insbesondere Titan, Zirkonium, Hafnium,
Vanadin, Niob, Tantal, Chrom, Molybdän, Wolfram, Mangan,
Palladium, Platin, Kupfer, Silber oder Gold enthalten,
während zusätzlich zu den glasbildenden Elementen X oder
gegebenenfalls anstelle von diesen die Elemente Aluminium,
Gallium, Indium, Germanium, Zinn, Arsen, Antimon, Wismut
oder Beryllium vorhanden sein können.

Besonders geeignet für das erfindungsgemäße federnde Abschirmelement ist eine amorphe Legierung der Zusammensetzung $Ni_aFe_bX_c$, mit $35 \leq a \leq 45$, $35 \leq b \leq 45$, c = 20,
a + b + c = 100.

Weiterhin haben sich bisher als geeignet erwiesen amorphe
Legierungen der Zusammensetzung $Fe_{80}X_{20}$ und $Co_dFe_eX_f$ mit
$70 \leq d \leq 78$, $2 \leq e \leq 10$, $20 \leq f \leq 25$, d + e + f = 100.
Derartige Legierungen sind beispielsweise aus "Science
Report of the Research Institutes, Tohoku University,
Sendai/Japan", A-Vol. 25, No. 6, Seite 232 ff. und
A-Vol. 26, No. 1, Seite 36 ff. bekannt.

Die genannten amorphen Legierungen zeigen bereits nach ihrer Herstellung durch rasches Abkühlen einer Schmelze ausreichende magnetische und sehr gute mechanische Eigenschaften. Durch Wärmebehandlungen zwischen der jeweiligen Curietemperatur und der jeweiligen Kristallisationstemperatur können die magnetischen Eigenschaften noch weiter verbessert, d.h. die Koerzitivfeldstärke abgesenkt und die Permeabilität erhöht werden.

Besonders günstig ist es, wenn das federnde Abschirmelement im entspannten Zustand gekrümmt ist. Durch entsprechende Bemessung dieser Krümmung kann man die Forderung erfüllen, daß das Magnetband beim Betrieb mit einer z.B. durch die üblichen Normen vorgeschriebenen Kraft an den Kopfspiegel angedrückt wird. Bei den kristallinen weichmagnetischen Legierungen kann man eine Krümmung leicht dadurch erreichen, daß man die erwähnte Glühbehandlung im gekrümmten Zustand der Legierung vornimmt, indem man beispielsweise ein Band aus dieser Legierung zu einem Ring aufwickelt. Bei amorphen Legierungen kann man eine Krümmung beispielsweise dadurch erreichen, daß man sie im gekrümmten Zustand herstellt.

Anhand einiger Figuren und Beispiele soll die Erfindung noch näher erläutert werden.

Figur 1 zeigt ein Ausführungsbeispiel für ein anmeldungsgemäßes federndes Abschirmelement für eine Tonbandkassette.

Figur 2 zeigt schematisch von oben gesehen ein federndes Abschirmelement nach Figur 1, wie es im entspannten Zustand in einer Kassette gelagert ist.

Figur 3 zeigt das gleiche Abschirmelement beim Andrücken des Magnetbandes an einen Tonkopf.

Das folgende Beispiel soll die Herstellung und die Eigenschaften von federnden Abschirmelementen aus einer kristallinen weichmagnetischen Legierung näher veranschaulichen.

Zunächst wurde ein 24,2 mm breites und 0,07 mm dickes Band aus einer Legierung mit etwa 76,5 Gew.-% Nickel, 4,5 Gew.-% Kupfer, 3 Gew.-% Molybdän, 3 Gew.-% Niob, 2 Gew.-% Titan, Rest Eisen und oxidierende Zusätze sowie herstellungsbedingte Verunreinigungen von insgesamt höchstens 1 Gew.-% hergestellt, wobei die abschließende Verformung durch Kaltwalzen erfolgte. Zwei jeweils 10 m lange Stücke dieses Bandes, die im folgenden Band 1 und Band 2 genannt werden, wurden zu je einem Ring mit 10 cm Durchmesser gewickelt.

Der Ring aus dem Band 1 wurde zunächst 2 Stunden lang bei 850°C geglüht, dann im Ofen auf 600°C abkühlen gelassen, dann zur Aushärtung 2 Stunden lang auf einer Temperatur von 600°C gehalten und schließlich in eine Kühlzone des Ofens gezogen und dort erkalten gelassen.

Der Ring aus dem Band 2 wurde zunächst 4 Stunden lang bei 900°C geglüht, dann im Ofen auf 600°C abgekühlt, auf dieser Temperatur 2 Stunden lang zur Aushärtung gehalten und ebenfalls in einer Kühlzone des Ofens erkalten gelassen.

Bei beiden Ringen erfolgten sämtliche Wärmebehandlungs- und Abkühlungsschritte unter Wasserstoff.

An den beiden Ringen bzw. Bändern wurden die statische Koerzitivfeldstärke $H_c$, die relative statische Permeabilität $\mu_4$ und eine Reihe von mechanischen Eigenschaften mit folgendem Ergebnis gemessen:

|  | Band 1 | Band 2 |
|---|---|---|
| $H_c$ mA/cm$^2$ | 23 | 12 |
| $\mu_4$ | 28 000 | 54 000 |
| Vickershärte HV | 285 | 220 |
| Festigkeit N/mm$^2$ | 900 | 720 |
| Streckgrenze N/mm$^2$ | 560 | 540 |
| Dehnung % | 10 | 10 |

Wie man sieht, nehmen $H_c$ und die mechanischen Werte mit zunehmender Glühtemperatur ab, während $\mu_4$ zunimmt. Das heißt, die magnetischen Werte werden günstiger, die mechanischen ungünstiger.

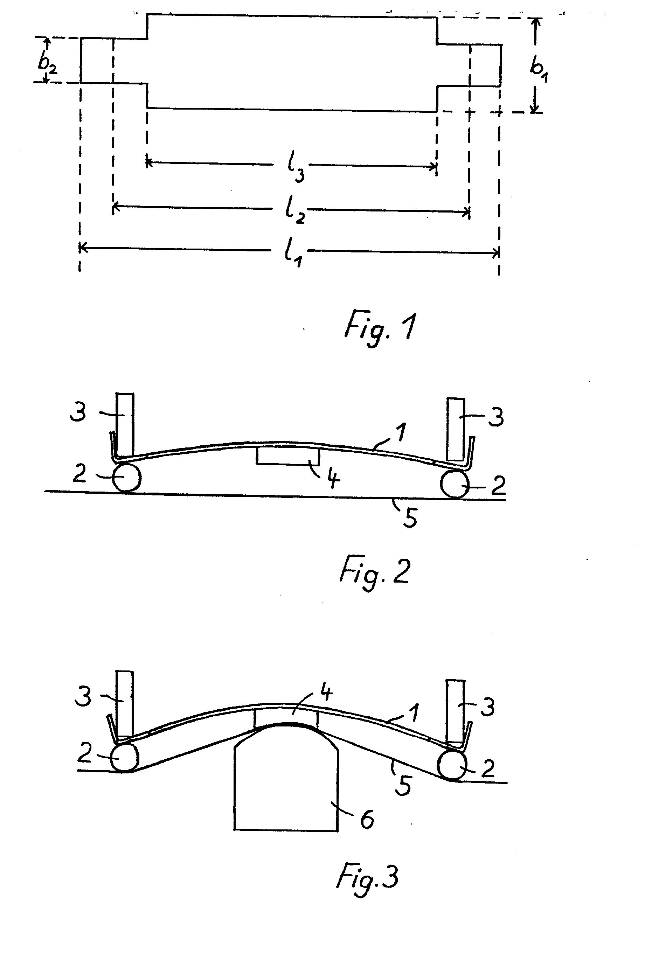

Aus beiden Bändern wurden streifenförmige Elemente hergestellt, wie sie Figur 1 von vorne zeigt. Die Abmessungen betrugen

$$l_1 = 24,5 \text{ mm},$$
$$l_2 = 21 \text{ mm},$$
$$l_3 = 17 \text{ mm},$$
$$b_1 = 5,5 \text{ mm},$$
$$b_2 = 2,5 \text{ mm}.$$

Zur Herstellung eines solchen Elementes wurde das Bandmaterial zwischen je zwei Backen zweier Lehren eingespannt, mit einem Meißel abgeschlagen und dann mittels der Lehre derart gebogen, daß an den Endpunkten von $l_2$ zur späteren Halterung dienende Knickstellen entstanden.

0008001

Die Längsrichtung der streifenförmigen Elemente stimmte mit der Längsrichtung des Bandes überein, so daß infolge der Glühung des zu einem Ring aufgewickelten Bandes eine Vorkrümmung gegeben war. Eine negative Auswirkung des Einspannens in die Lehren auf die Vorkrümmung der Elemente wurde nicht beobachtet. Für eine laufende Fertigung können die Abschirmelemente natürlich aus dem Bandmaterial herausgestanzt werden.

An den so hergestellten Elementen wurde dann die Federkraft und die Abschirmwirkung gemessen.

Die Abschirmwirkung wurde mittels einer Helmholtzspulenanordnung geprüft, in deren Mitte ein 50 Hz-Wechselfeld mit einer Amplitude von 0,2 A/cm herrscht. Innerhalb der Helmholtzspule befindet sich eine Vorrichtung, die es erlaubt, eine Kompaktkassette an einen kombinierten Aufnahme-/Wiedergabekopf so anzudrücken wie in einem Kassettenrekorder. Diese Vorrichtung ist auf einem Drehteller so montiert, daß der Kopf beim Drehen immer in der Mitte der Helmholtzspule bleibt. Die im Kopf induzierte Spannung wird einem Verstärker zugeführt. Der Tonkopf wird so im Feld eingedreht, daß die induzierte Spannung ein Maximum aufweist.

Die Messung erfolgte mit zwei Tonkopftypen A und B, wobei beim Typ A die Kopfabschirmung den Kopfspiegel um etwa 1 mm überragt, während sie beim Typ B nur bis zum Kopfspiegel reicht. Zum Vergleich wurde ferner die Abschirmwirkung eines üblichen flachen Abschirmteils aus Silizium-Eisen-Blech, eines Abschirmbügels aus einer hochpermeablen Permalloy-Legierung und einer Abschirmung in Form eines Hohlquaders gemessen.

Zur Messung der Federkraft wurden die Elemente nach Figur 1 mit einem üblichen Andruckfilz versehen und in eine Kompaktkassette eingelegt, die dann in eine Halterung eingebracht wurde. Anschließend wurde mit einer Meßuhr das Federelement bis zur vorgeschriebenen Tiefe eingedrückt, deren Erreichen durch ein Lichtsignal angezeigt wurde. Sobald dieses aufleuchtet, wurde jeweils die Federkraft an der Meßuhr abgelesen. Zum Vergleich wurde auch die Federkraft eines Federelementes aus Berylliumbronze gemessen. Die Ergebnisse waren:

|  | Induzierte Spannung (verstärkt) mV | | Federkraft |
|  | Tonkopf A | Tonkopf B | mN |
|---|---|---|---|
| ohne Abschirmung | 95,0 | 165,0 | - |
| Si-Fe-Blech | 40,0 | 66,0 | - |
| Permalloy-Leg. | 21,5 | 38,0 | - |
| Hohlquader | 17,0 | 27,0 | - |
| Band 1 | 20,4 | 36,4 | 346,2 |
| Band 2 | 19,0 | 35,4 | 362,8 |
| Bronzefeder | - | - | 314 bis 353. |

Die für das Band 1 und das Band 2 angegebenen Werte sind dabei Mittelwerte aus 10 Proben.

Wie aus der Tabelle hervorgeht, liegt die Abschirmwirkung der anmeldungsgemäßen federnden Abschirmelemente zwischen der der Permalloy-Legierung und des Hohlquaders. Obwohl bei der Herstellung der Abschirmelemente aus schlußgeglühtem Bandmaterial die magnetischen Werte infolge der Verformung an den Kanten gegenüber den am Band gemessenen etwas verringert werden, wird dennoch eine hervorragende Abschirmwirkung erzielt.

Die Wirkung der Vorkrümmung des federnden Abschirmelementes ist schematisch in den Figuren 2 und 3 dargestellt. In Figur 2 befindet sich das federnde Abschirmelement 1 im gekrümmten, entspannten Zustand. Es wird in der Kassette in Schlitzen zwischen den Stiften 2 und Wandstücken 3 gehalten. Mit 4 ist eine Filzauflage und mit 5 das Tonband bezeichnet. Figur 3 zeigt die gleiche Anordnung im Betriebszustand. Hier ist das federnde Abschirmelement 1 gespannt und drückt mit Hilfe des Andruckfilzes 4 das Tonband 5 gegen den Kopfspiegel des Magnetkopfes 6.

Auch mit Abschirmelementen aus kristallinen weichmagnetischen Legierungen anderer Zusammensetzung konnten befriedigende Abschirm- und Federwirkungen erzielt werden, beispielsweise mit einem federnden Abschirmelement aus einer Legierung mit etwa 73 Gew.-% Nickel, 10 Gew.-% Kupfer, 1,5 Gew.-% Niob, 2 Gew.-% Titan, Rest Eisen sowie desoxidierende Zusätze und herstellungsbedingte Verunreinigungen von insgesamt höchstens 1 Gew.-%. Bei einem als Ausgangsmaterial für ein Abschirmelement entsprechend dem Band 2 wärmebehandelten, 10 mm breiten und 0,1 mm dicken Band aus dieser Legierung war beispielsweise $H_c$ = 15 mA/cm, $\mu_4$ = 7000 und die Vickershärte = 215 HV.

Das folgende Beispiel soll die Abschirmeigenschaften einer federnden Abschirmung aus einer weichmagnetischen amorphen Legierung verdeutlichen. Ausgegangen wurde von einem 7,9 mm breiten und 0,04 mm dicken Band aus einer amorphen Legierung der Zusammensetzung $Fe_{40}Ni_{40}B_{20}$. Dieses Band hatte bereits im Herstellungszustand, also ohne thermische Vergütung, sehr günstige Eigenschaften. Die statische Koerzitivfeldstärke betrug etwa 40 mA/cm, die statische Permeabilität $\mu_4$ etwas über 2000, die Vickershärte betrug etwa 1000 HV, die Festigkeit und die Streckgrenze lag bei 2000 N/mm$^2$, die Dehnung bei etwa 2 %.

Die Abschirmwirkung eines 21 mm langen Stückes aus diesem Band wurde mit Hilfe des Tonkopfes B in gleicher Weise bestimmt, wie bereits erläutert. Während die induzierte Spannung ohne Abschirmung 180 mV und bei Verwendung eines Hohlquaders 24,6 mV betrug, wurden bei Verwendung des amorphen Bandes und bei einem Abstand zwischen Tonkopfspiegel und Abschirmelement von etwa 1 mm nur etwa 23 mV induziert. Auch diese amorphe Legierung zeigt somit eine ausgezeichnete Abschirmwirkung bei gleichzeitig guten mechanischen Federeigenschaften.

Die anmeldungsgemäßen federnden Abschirmungen eignen sich wegen ihres geringen Raumbedarfs insbesondere für Kompaktkassetten, kommen jedoch auch für alle anderen Magnetbandkassetten in Frage. Ferner können sie auch zu anderen Zwecken eingesetzt werden, bei denen gleichzeitig mit der Abschirmwirkung auch eine Federwirkung erforderlich ist. Ein Beispiel hierfür sind etwa magnetische Kontaktfedern für weichmagnetische Verschlußeinrichtungen von magnetischen Abschirmungen.

0008001

<u>Patentansprüche</u>

1. Federndes Abschirmelement, insbesondere für Magnetbandkassetten, d a d u r c h   g e k e n n z e i c h n e t , daß es aus einer federnden weichmagnetischen Legierung besteht.

2. Federndes Abschirmelement nach Anspruch 1, d a d u r c h   g e k e n n z e i c h n e t , daß es streifenförmig ausgebildet ist.

3. Federndes Abschirmelement nach Anspruch 1 oder 2, d a d u r c h   g e k e n n z e i c h n e t , daß die Legierung eine statische Koerzitivfeldstärke von weniger als 200 mA/cm, eine relative statische Permeabilität $\mu_4$ von mindestens 2000 und eine Vickershärte von mindestens 180 aufweist.

4. Federndes Abschirmelement nach Anspruch 3, d a d u r c h   g e k e n n z e i c h n e t , daß die Streckgrenze der Legierung mindestens 500 N/mm$^2$ beträgt.

0008001

5. Federndes Abschirmelement nach einem der Ansprüche 1 bis 4, d a d u r c h   g e k e n n z e i c h n e t , daß die Legierung aus 35 bis 87 Gew.-% Nickel, 0 bis 10 Gew.-% Niob, 0 bis 5 Gew.-% Titan, 0 bis 12 Gew.-% Kupfer, 0 bis 6 Gew.-% Molybdän, 0 bis 4 Gew.-% Chrom und, abgesehen von desoxidierenden Zusätzen und den üblichen herstellungsbedingten Verunreinigungen, zum restlichen Teil aus Eisen besteht, mit der Maßgabe daß der Gesamtgehalt an Niob und Titan zwischen 1,5 und 10 Gew.-% und der Gesamtgehalt an Kupfer, Molybdän und Chrom zwischen 0 und 13 Gew.-% liegt und daß bei einem Titangehalt von 0 Gew.-% der Niobgehalt wenigstens 5 Gew.-% beträgt.

6. Federndes Abschirmelement nach Anspruch 5, d a - d u r c h   g e k e n n z e i c h n e t , daß der Nickelgehalt der Legierung zwischen 68 und 81 Gew.-% und der Gesamtgehalt an Kupfer, Molybdän und Chrom zwischen 1,5 und 13 Gew.-% liegt.

7. Federndes Abschirmelement nach Anspruch 6, d a - d u r c h   g e k e n n z e i c h n e t , daß der Gesamtgehalt der Legierung an Niob und Titan zwischen 2 und 9 Gew.-% liegt und bei fehlendem Niob der Titangehalt zwischen 2 und 3 Gew.-% sowie bei fehlendem Titan der Niobgehalt zwischen 7 und 9 Gew.-% liegt.

0008001

8. Federndes Abschirmelement nach Anspruch 7, d a - d u r c h g e k e n n z e i c h n e t , daß die Legierung aus 72 bis 77 Gew.-% Nickel, 4 bis 11 Gew.-% Kupfer, 0 bis 4 Gew.-% Molybdän, 1 bis 3,5 Gew.-% Niob, 1,5 bis 2,5 Gew.-% Titan und, abgesehen von desoxidierenden Zusätzen und herstellungsbedingten Verunreinigungen von insgesamt höchstens 1 Gew.-%, zum restlichen Teil aus Eisen besteht.

9. Federndes Abschirmelement nach einem der Ansprüche 2 bis 8, d a d u r c h g e k e n n z e i c h n e t , daß die Streifendicke 0,07 bis 0,25 mm beträgt.

10. Federndes Abschirmelement nach einem der Ansprüche 1 bis 4, d a d u r c h g e k e n n z e i c h n e t , daß es aus einer weichmagnetischen amorphen Legierung besteht.

11. Federndes Abschirmelement nach Anspruch 10, d a - d u r c h g e k e n n z e i c h n e t , daß die amorphe Legierung die Zusammensetzung $Ni_aFe_bX_c$ besitzt, mit $35 \leq a \leq 45$, $35 \leq b \leq 45$, $c = 20$ und $a+b+c = 100$, wobei X eines der Elemente Phosphor, Bor, Kohlenstoff und Silizium bedeutet.

12. Federndes Abschirmelement nach einem der Ansprüche 1 bis 11, d a d u r c h g e k e n n z e i c h n e t , daß es im entspannten Zustand gekrümmt ist.

1/1

Fig. 1

Fig. 2

Fig.3

Europäisches
Patentamt

**EUROPÄISCHER RECHERCHENBERICHT**

0008001
Nummer der Anmeldung

EP 79 102 286.6

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| X | <u>DE - B2 - 2 320 439</u> (BASF AG)<br>* Ansprüche 1, 4 und 5; Spalte 2, Zeilen 15 bis 64; Spalte 3, Zeilen 44 bis 46; Fig. 1a und 1b * | 1,2,<br>5,9,<br>12 | G 11 B 23/04<br>C 22 C 19/00 |
| | -- | | |
| | <u>DE - A - 2 303 952</u> (SONY CORP.)<br>* Ansprüche 1 bis 3; Seite 14, letzter Absatz * | 5 | **RECHERCHIERTE SACHGEBIETE (Int. Cl.³)** |
| | -- | | |
| D | <u>DE - A - 2 225 020</u> (HITACHI METALS LTD.)<br>* Anspruch 2; Seite 7, 1. Absatz * | 8 | C 22 C 19/00<br>G 11 B 23/00 |
| | ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 06-11-1979 | LEITHÄUSER |

EPA form 1503.1  06.78